# EUROPEAN PATENT SPECIFICATION

(11) **EP 1 560 389 B1**
(45) Date of publication and mention of the grant of the patent: **17.10.2007**
(21) Application number: 04290236.1
(22) Date of filing: 30.01.2004
(51) Int. Cl.: H04L 25/03, H04L 1/00

(54) **Method and receiver for optical or electromagnetic signals with iterative equalization and error correction**
Verfahren und Empfänger für optische oder elektromagnetische Signale mit iterativer Entzerrung und Fehlerkorrektur
Procédé et récepteur pour des signaux optiques ou électromagnétiques avec une égalisation itérative et une correction d'erreurs

(43) Date of publication of application: 03.08.2005
(73) Proprietor: Alcatel Lucent, 75008 Paris (FR)
(72) Inventor: Buchali, Fred, Dr., 71336 Waiblingen (DE)
(74) Representative: Knecht, Ulrich Karl

(56) References cited:
- EP-A- 1 065 851
- US-A- 6 058 227
- US-B1- 6 567 481
- US-B1- 6 671 338

## Description

### Technical field:

The invention describes a receiver for a digitalized-data transmitting, optical or electromagnetic signal with a digital equalizer / Forward Error Correction (FEC) setup with an iterative equalization and error-correction loop. By repeatedly running the loop, the efficiency of a digital equalizer, especially a Viterbi Equalizer, in combination with an FEC can be optimized.

### Background of the invention:

The invention relates to a receiver according to the specifying features of Claim 1 and to a method according to the specifying features of Claim 6.
When digital data are to be transmitted by means of an analog electromagnetic or optical signal, the problem occurs that when the signal arrives at a receiver at the end of the transmission path, due to interferences and losses along the transmission path, the digital data cannot be related as unambiguously to the analog signal anymore as it was possible when the signal was injected into the transmission path. Especially in the case of broadband signals that are to be transmitted along a long transmission path, the quality of the digital signal is noticeably reduced due to the noise that gets more and more as the distance grows. By improving the receiver's ability to identify digital data transmitted by the analog signal, leading to a reduced number of amplifiers along the transmission path, costs can be reduced and the error rate of the data received can be lowered. Improvements of the receivers are limited to the improvement of the algorithms used for digital equalization after the analog-to-digital conversion.
In this context, special attention is given to so-called Viterbi equalizers, which are digital electronic equalizers with lowest error rates or often highest efficiency, that can be used for treating distorted signals. They are applied in combination with Forward Error Correction (FEC). Both must reduce the signal-to-noise ratio to an absolute minimum. Such a combination is still not well-controlled for high transmission rates in the range of 10 to 40Gbit/s and higher of optical signals.
Next-generation 10 and 40 Gbit/s data transmission systems are operated close to the noise limit without spending much margins for transmission impairments. An efficient mitigation of these impairments is mandatory to meet the needs of these systems.
The known combination of Viterbi equalizer and FEC such as disclosed in EP1065851 is not sufficient to achieve an efficient mitigation of these impairments, so as to ensure that an acceptable maximum error rate during data transmission in next-generation data transmission systems is not exceeded.

### Technical purpose of the invention:

The technical purpose of the invention is to develop a receiver capable of reducing the signal-to-noise ratio necessary for unambiguously identifying digital data transmited by means of an electromagnetic or optical signal to an absolute minimum, and capable of identifying digital data also in signals heavily corrupted by additive noise and distortions, and to develop a method for enabling such an unambiguous identification for signals with a minimum signal-to-noise ratio.

### Disclosure of the invention and its advantages:

The first part of the invention's technical purpose is fully met by said receiver of said specifying features of Claim 1, wherein the receiver is characterized in that said digital equalizer and Forward Error Correction are combined together to obtain an iterative equalization and error-correction loop.
The proposed solution is based on an iteration where the data are equalized and error-corrected and coded in each iteration loop. In order to achieve additional coding/equalization gain, it is mandatory to apply an iterative setup which outperforms combinations of optical and electronical means.
The soft data outputted by an analog-to-digital converter (ADC) is being fed in a usual way to a digital equalizer and subsequently to a Forward Error Correction (FEC). An elementary difference compared to the state-of-the-art results from the fact that the signal outputted by the digital equalizer to the FEC and subsequently outputted by the FEC consists of soft data. By generating a soft-data output signal in the FEC, the output signal can be fed to the digital equalizer again. This procedure can basically be iterated at will, however, due to practical reasons, the procedure is being terminated after a predefined number of iterations or after the output signal has achieved the desired quality.
Exactly like in a sender, the signal outputted by the FEC, comprising no check bits, is being fed to a FEC-coding apparatus, which adds the check bits eliminated in the FEC to the signal again. The output signal is then fed to a distortion-coding apparatus, which equips the signal again with the original channel coding equalized by the digital equalizer, a Viterbi equalizer. By repeatedly running the loop, the efficiency of the equalizer as well as the FEC can be optimized. By this, an application in systems which are operated close to the noise limit is possible. The iterative equalization and error correction lead to drastically reduced minimum optical-signal-to-noise ratio values, thereby improving the system budget. The procedure works as follows: On the receiver side, an analog signal, e.g. an optical signal, is fed to an ADC. Each amplitude corresponds to a digital signal in the form of ,1' or ,0'. The ADC transforms the analog signal in digital soft data. The soft data comprises groups of bits, each corresponding to an analogue amplitude. By transforming the analog input signal into bit groups of a soft-data output signal, the value of the amplitude of the analogue signal can be digitally captured and used for making a hard decision, i.e. relating the analog signal to a digital value in the form of ,1' or ,0'. The digital equalizer used for the iterative equalization and the error-correction loop is a soft-in/soft-out digital equalizer, which is capable of processing and outputting soft data. The soft data outputted by the digital equalizer is being fed to a modified FEC which is capable of both processing and outputting soft data. According to the state of the art, FECs are exclusively used for processing binary data, i.e. ,hard' data, which, unlike soft data, comprise no interim values as additional information. Since the FEC outputs soft data, it is now possible to feed this output signal to the digital equalizer, after the output signal has been preprocessed again the way it has been preprocessed prior to the digital-analog conversion on the sender side. By repeatedly running this loop, consisting of digital equalizer, FEC and signal preprocessing, the identification of the bits can be improved and the error rate can be reduced, before, following a predefined number of iterations, the soft-data signal is fed to a hard-decision device, which relates bit values to the soft data in the form of ,1' and ,0'. By doing so, the signal-to-noise ratio and optical signal-to-noise ratio, respectively, necessary for unambiguously identifying digital data transmitted by means of an electromagnetic or optical signal, can be reduced to an absolute minimum.

In a preferred embodiment of said receiver, the iteration loop is set up such that the FEC is connected to the output of the equalizer, with the equalizer itself being connected to the output of the FEC.

In the embodiment of said receiver, the digital equalizer used is a Viterbi equalizer. The iteration loop is made out of a Viterbi equalizer and a FEC decoder, with the Viterbi equalizer being modified compared to the state of the art such that it is capable of outputting soft data instead of binary data. The Viterbi equalizer submits said soft data instead of binary data to the FEC and the FEC corrects the errors in the soft data. The data outputted by the FEC are also soft data and are being fed back to the Viterbi equalizer, with a FEC-coding apparatus and a distortion-coding apparatus placed in the feedback path leading back from the FEC's output to the Viterbi equalizer's input. The arrangement of the FEC-coding apparatus and the distortion-coding apparatus may correspond with a part of the structure of a sender for injecting digitalized-data transmitting optical or electromagnetic signals into a transmission path.

In another preferred embodiment of said receiver, in front of the ADC an analog equalizer is placed in the signal path leading to the error-correction loop consisting of the digital equalizer, the FEC and the feedback path.

In an additional preferred embodiment of said receiver, the analog equalizer is an optical equalizer, for example placed between the demultiplexer and the optical-electrical converter.

The second part of the invention's technical purpose is fully met by the method for improving the exactness in relating binary data to a digitalized-data transmitting, analog electromagnetic or optical signal arriving at a receiver, comprising the steps of
a) transforming the arriving analog signals into digital soft data representing interim values, which indicate the value of the amplitude of the analog signal,
b) feeding the soft data to a digital equalizer,
c) feeding the soft-data signal further processed in the way described to a soft-in/soft-out FEC,
d) error correction of the soft data in the FEC by means of the check bits contained in the signal,
e) removal of the check bits in the FEC,
f) output of the error-corrected signal by the FEC as soft data,
g) preprocessing the signal for reinjection into a digital equalizer, e.g. by adding check bits by a FEC coder and installing a channel coding by a distortion coder, wherein the FEC coder is synchronized by the FEC decoder and the distortion coder is controlled by the digital equalizer by using channel estimations provided by the Viterbi equalizer,
h) feeding back the signal to the digital equalizer placed in the signal path, and
i) repeating steps c) to j) until no further improvement of the data quality can be detected or until a predefined number of iteration loops have been executed, and
j) hard decision and transformation of the soft data preprocessed in the way described into binary data, e.g. in a hard-decision device.

In a preferred embodiment of said method, the digital equalizer is a soft-in/soft-out Viterbi equalizer.

In an example of said method, a step of sequential determination of the interim value representing the boundary at which the decision would have to be made whether a '0' or a '1' had to be related to the soft data when transformed to binary data in the digital equalizer is inserted between step b) and c).

### Paths for performing the invention:

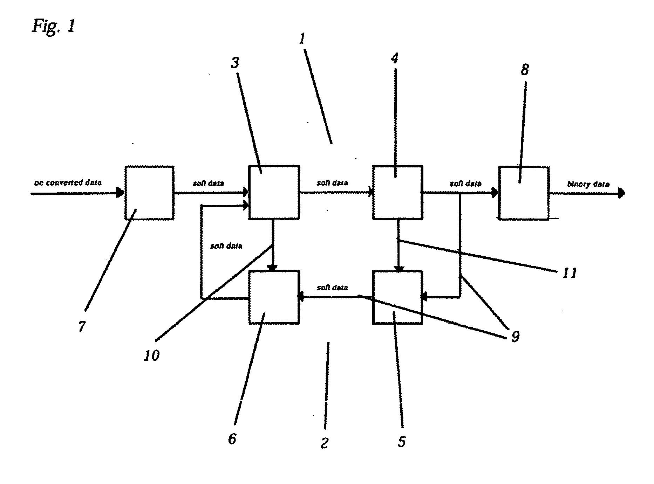

A receiver 1 as shown in Figure 1 consists of an iteration loop 2 comprising a Viterbi equalizer 3 and a FEC decoder 4. The Viterbi equalizer 3 feeds soft data instead of binary data to the FEC decoder 4 and the FEC decoder 4 corrects the errors. The FEC decoder 4 outputs corrected soft data which are coded in the iteration loop 2 in the FEC coder 5 and in the distortion coder 6 before being fed back to the Viterbi equalizer 3, wherein the FEC coder 5 is synchronized 11 by the FEC decoder 4. FEC coder 5 and distortion coder 6 are placed in the feedback path 9 of the iteration loop 2, wherein the distortion coder 6 is controlled 10 by the Viterbi equalizer 3 by using channel estimations provided by the Viterbi equalizer 3. The Viterbi equalizer 3 considers the distortion as coding and the equalization is based on a channel model. For the subsequent iteration loop a coding according to the channel model is mandatory.

### The detailed process can be described as follows:

An analog signal, e.g. an optical signal, is being fed to an ADC 7 on the receiver side. Each amplitude corresponds to a digital signal in form of '1' or '0'. The ADC 7 transforms the analog signal in digital soft data. The soft data comprises groups of bits, each corresponding to the value of the related analog amplitude. By transforming the analog input signal into bit groups of a soft-data output signal, the value of the amplitude of the analog signal can be digitally captured and used for making a hard decision, i.e. relating the analog signal to a digital value in the form of ,1' or ,0'. The Viterbi equalizer 3 used for the iteration loop 2 is a soft-in/soft-out Viterbi equalizer, which is capable of processing and outputting soft data. The soft data outputted by the Viterbi equalizer 3 is being fed to a modified FEC decoder 4 which is capable of both processing and outputting soft data. According to the state of the art, FECs are exclusively used for processing binary data, i.e. ,hard' data, which, unlike soft data, comprise no interim values as additional information. Since the FEC decoder 4 outputs soft data, it is now possible to feed this output signal to the Viterbi equalizer 3, after the output signal has been preprocessed again the way it has been preprocessed prior to the digital-analog conversion on the sender side. By repeatedly running this loop 2, consisting of Viterbi equalizer 3, FEC decoder 4 and signal preprocessing by means of FEC coder 5 and distortion coder 6, the identification of the bits can be improved and the error rate can be reduced, before, following a predefined number of iterations in the iteration loop 2, the soft-data signal is fed to a hard-decision device 8, which relates bit values to the soft data in the form of , 1' and ,0'.

### Commercial applicability:

The invention is commercially applicable particularly in the field of production and operation of networks for optical and/or electromagnetic data transmission.

### List of reference numerals:

- 1: receiver
- 2: iteration loop
- 3: Viterbi equalizer
- 4: Forward Error Correction decoder (FEC decoder)
- 5: Forward Error Correction coder (FEC coder)
- 6: distortion coder
- 7: Analog-to-Digital Converter (ADC)
- 8: Hard-Decision Device
- 9: feedback path
- 10: control
- 11: synchronisation

## Claims

1. Receiver for digitalized-data transmitting signals comprising a Viterbi equalizer (3) and a soft-in/soft-out decoder (4) which are combined together to obtain an iterative equalization, **characterized in that** said Viterbi equalizer (3) is a soft-in/soft-out Viterbi equalizer (3) and said decoder is a soft-in/soft-out Forward Error Correction decoder (4) for error-correcting the signal, and both are combined together in an iteration loop (2) which further comprises a soft-in/soft-out Forward Error Correction coder (5) for re-encoding the error-corrected signal and a soft-in/soft-out distortion coder (6) for distorting the re-encoded signal using channel estimations provided by the Viterbi equalizer (3) before re-injection of the signal into the soft-in/soft-out Viterbi equalizer (3).

2. Receiver according to Claim 1, **characterized in that** the iteration loop (2) is set up such that said soft-in/soft-out Forward Error Correction decoder (4) is connected to the output of the Viterbi equalizer (3), said decoder providing an output to a hard-decision device (8) also.

3. Receiver according to one of the previous Claims, **characterized in that** in front of the analog-to-digital converter (7) an analog equalizer is placed in the signal path leading to the iteration loop (2) consisting of the digital equalizer (3), the Forward Error Correction decoder (4) and the feedback path (9, 5, 6).

4. Receiver according to claim 3, **characterized in that** the analog equalizer is an optical equalizer.

5. Method for improving the exactness in relating binary data to a digitalized-data transmitting, analog signal arriving at a receiver, comprising the steps:
a) transforming the arriving analog signals into digital soft data representing interim values, which indicate the value of the amplitude of the analog signal,
**characterized by**
b) feeding the soft data to a soft-in/soft-out Viterbi equalizer (3),
c) feeding the soft-data signal further processed to a soft-in/soft-out Forward Error Correction decoder (4),
d) error correction of the soft data by means of the check bits contained in the signal,
e) removal of the check bits from the soft data in the Forward Error Correction decoder (4)
f) output of the error-corrected signal in the form of soft data by the Forward Error Correction decoder (4),
g) preprocessing the error-corrected signal for reinjection into the soft-in/soft-out Viterbi equalizer (3) by re-encoding the error-corrected signal in a soft-in/soft-out Forward Error Correction coder (5) and by distorting the re-encoded signal in a soft-in/soft-out distortion coder (6) using channel estimations provided by the Viterbi equalizer (3),
h) feeding back the preprocessed signal to the soft-in/soft-out Viterbi equalizer (3) placed in the signal path, and
i) repeating steps c) to h) until no further improvement of the data quality can be detected or until a predefined number of iteration loops have been executed, and
j) hard decision and transformation of the soft data preprocessed in the way described into binary data.

## Patentansprüche

1. Empfänger für Signale, die digitalisierte Daten übertragen, der einen Viterbi-Entzerrer (3) und einen Soft-In-/Soft-Out-Decodierer (4) enthält, die kombiniert sind, um eine iterative Entzerrung zu erhalten, **dadurch gekennzeichnet, dass** der Viterbi-Entzerrer (3) ein Soft-In-/Soft-Out-Viterbi-Entzerrer (3) und der Decodierer ein Soft-In-/Soft-Out-Vorwärts-Fehlerkorrektur-Decodierer (4) zur Fehlerkorrektur des Signals ist, und beide in einer Iterationsschleife (2) kombiniert werden, die weiterhin einen Soft-In-/Soft-Out-Vorwärts-Fehlerkorrektur-Codierer (5) enthält, um das fehlerkorrigierte Signal neu zu codieren, und einen Soft-In-/Soft-Out-Verzerrungs-Codierer (6), um das neu codierte Signal zu verzerren, wozu Kanal-Bewertungen verwendet werden, die vom Viterbi-Entzerrer (3) geliefert werden, bevor das Signal neu in den Soft-In-/Soft-Out-Viterbi-Entzerrer (3) eingespeist wird.

2. Empfänger gemäß Anspruch 1, **dadurch gekennzeichnet, dass** die Iterationsschleife (2) so eingerichtet ist, dass der Soft-In-/Soft-Out-Vorwärts-Fehlerkorrektur-Decodierer (4) mit dem Ausgang des Viterbi-Entzerrers (3) verbunden ist, wobei der Decodierer auch ein Ausgangssignal an eine Entscheidungsvorrichtung (8) liefert.

3. Empfänger gemäß einem der vorherigen Ansprüche, **dadurch gekennzeichnet, dass** vor dem Analog-/Digital-Wandler (7) ein Analog-Entzerrer im Signalpfad angeordnet wird, der zur Iterationsschleife (2) führt, die aus dem digitalen Entzerrer (3), dem Vorwärts-Fehlerkorrektur-Decodierer (4) und dem Rückkopplungs-Pfad (9, 5, 6) besteht.

4. Empfänger gemäß Anspruch 3, **dadurch gekennzeichnet, dass** der Analog-Entzerrer ein optischer Entzerrer ist.

5. Verfahren zur Verbesserung der Genauigkeit bei der Zuordnung von Binärdaten zu einem Analogsignal, das digitalisierte Daten überträgt und an einem Empfänger eintrifft, wobei das Verfahren folgende Schritte umfasst:
a) Umwandlung der eintreffenden analogen Signale in digitale Soft-Daten, die Zwischenwerte repräsentieren, welche den Wert der Amplitude des Analogsignals anzeigen,
**gekennzeichnet durch**
b) Anlegen der Soft-Daten an einen Soft-In-/Soft-Out-Viterbi-Entzerrer (3),
c) Anlegen des weiter verarbeiteten Soft-Daten-Signals an einen Soft-In-/Soft-Out-Vorwärts-Fehlerkorrektur-Decodierer (4),
d) Fehlerkorrektur der Soft-Daten mittels der im Signal enthaltenen Prüfbits,
e) Entfernen der Prüfbits aus den Soft-Daten im Vorwärts-Fehlerkorrektur-Decodierer (4)
f) Ausgabe des fehlerkorrigierten Signals in Form von Soft-Daten **durch** den Vorwärts-Fehlerkorrektur-Decodierer (4),
g) Vorverarbeitung des fehlerkorrigierten Signals, um es wieder in den Soft-In-/Soft-Out-Viterbi-Entzerrer (3) einzuspeisen, indem das fehlerkorrigierte Signal in einem Soft-In-/Soft-Out Vorwärts-Fehlerkorrektur-Codierer (5) erneut codiert wird, und indem das neu codierte Signal in einem Soft-in-/Soft-Out-Verzerrungs-Codierer (6) verzerrt wird, wozu Kanal-Bewertungen verwendet werden, die vom Viterbi-Entzerrer (3) bereitgestellt werden,
h) Rückkopplung des vorverarbeiteten Signals an den im Signalpfad angeordneten Soft-In-/Soft-Out-Viterbi-Entzerrer (3), und
i) Wiederholen der Schritte c) bis h), bis keine weitere Verbesserung der Datenqualität erkannt werden kann, oder bis eine vordefinierte Anzahl von Iterations-Schleifendurchläufen ausgeführt wurde, und
j) Entscheidung und umwandlung der auf die beschriebene Weise vorverarbeiteten Soft-Daten in Binärdaten.

## Revendications

1. Récepteur pour des signaux transmettant des données numérisées comprenant un égaliseur de Viterbi (3) et un décodeur à entrée indirecte / sortie indirecte (4) qui sont combinés ensemble pour obtenir une égalisation itérative, **caractérisé en ce** ledit égaliseur de Viterbi (3) est un égaliseur de Viterbi à entrée indirecte / sortie indirecte (3) et ledit décodeur est un décodeur de correction directe d'erreurs à entrée indirecte / sortie indirecte (4) pour la correction des erreurs du signal et les deux sont combinés ensemble dans une boucle d'itération (2) qui comprend en plus un codeur de correction directe d'erreurs à entrée indirecte / sortie indirecte (5) pour le ré-encodage du signal aux erreurs corrigées et un codeur de distorsion à entrée indirecte / sortie indirecte (6) pour la distorsion du signal ré-encodé en utilisant les estimations de canaux fournies par l'égaliseur de Viterbi (3) avant de réinjecter le signal dans l'égaliseur de Viterbi à entrée indirecte / sortie indirecte (3).

2. Récepteur selon la revendication 1, **caractérisé en ce que** la boucle d'itération (2) est configurée de telle sorte que ledit décodeur de correction directe d'erreurs à entrée indirecte / sortie indirecte (4) est connecté à la sortie de l'égaliseur de Viterbi (3), ledit décodeur fournissant également une sortie vers un dispositif de décision directe (8).

3. Récepteur selon la revendication 1, **caractérisé en ce qu'**un égaliseur analogique est placé avant le convertisseur analogique/numérique (7) dans le trajet du signal qui mène à la boucle d'itération (2) composée de l'égaliseur numérique (3), du décodeur de correction directe d'erreurs (4) et du trajet de contre-réaction (9, 5, 6).

4. Récepteur selon la revendication 3, **caractérisé en ce que** l'égaliseur analogique est un égaliseur optique.

5. Procédé pour améliorer l'exactitude dans la mise en rapport de données binaires avec une transmission de données numérisées, le signal analogique arrivant au niveau d'un récepteur, comprenant les étapes :
a) conversion des signaux analogiques arrivants en données indirectes numériques représentant des valeurs intermédiaires qui indiquent la valeur de l'amplitude du signal analogique,
**caractérisé par**
b) l'acheminement des données indirectes à un égaliseur de Viterbi à entrée indirecte / sortie indirecte (3),
c) acheminement du signal de données indirectes après un traitement ultérieur à un décodeur de correction directe d'erreurs à entrée indirecte / sortie indirecte (4),
d) correction des erreurs des données indirectes au moyen des bits de contrôle contenus dans le signal,
e) suppression des bits de contrôle des données indirectes dans le décodeur de correction directe d'erreurs (4),
f) sortie du signal aux erreurs corrigées sous la forme de données indirectes par le décodeur de correction directe d'erreurs (4),
g) prétraitement du signal aux erreurs corrigées en vue de sa réinjection dans l'égaliseur de Viterbi à entrée indirecte / sortie indirecte (3) en ré-encodant le signal aux erreurs corrigées dans un codeur de correction directe d'erreurs à entrée indirecte / sortie indirecte (5) et en déformant le signal ré-cncodé dans un décodeur de distorsion à entrée indirecte / sortie indirecte (6) en utilisant le estimations de canaux fournies par l'égaliseur de Viterbi (3),
h) réacheminement du signal prétraité à l'égaliseur de Viterbi à entrée indirecte / sortie indirecte (3) qui se trouve dans le trajet du signal, et
i) répétition des étapes c) à h) jusqu'à ce que plus aucune amélioration de la qualité du signal ne puisse être détectée ou jusqu'à l'exécution d'un nombre prédéfini de boucles d'itération, et
j) décision directe et transformation des données indirectes prétraitées de la manière décrite en données binaires.
